## Europäisches Patentamt
## European Patent Office
## Office européen des brevets

(11) Veröffentlichungsnummer: **0 006 202**
**B1**

(12) # EUROPÄISCHE PATENTSCHRIFT

(45) Veröffentlichungstag der Patentschrift:
16.09.81

(51) Int. Cl.³: **C 01 B 33/32**

(21) Anmeldenummer: **79101860.9**

(22) Anmeldetag: **11.06.79**

(54) Verfahren zur Herstellung von Wasserglas.

(30) Priorität: **16.06.78 DE 2826432**

(43) Veröffentlichungstag der Anmeldung:
**09.01.80 Patentblatt 80/1**

(45) Bekanntmachung des Hinweises auf die Patenterteilung:
**16.09.81 Patentblatt 81/37**

(84) Benannte Vertragsstaaten:
**BE CH FR GB IT LU NL SE**

(73) Patentinhaber: **Henkel Kommanditgesellschaft auf Aktien, -Patentabteilung-
Postfach 1100 Henkelstrasse 67,
D-4000 Düsseldorf 1 (DE)**

(72) Erfinder: **Volgnandt, Peter, Dr., Zwickauer Strasse 37,
D-4000 Düsseldorf-Vennhausen (DE)**

(56) Entgegenhaltungen:
DE-A-2 619 604
FR-A-2 343 698
FR-A-2 370 686
FR-A-2 370 687

CHEMICAL ABSTRACTS, Band 80, Nr. 4,
28. Januar 1974
Columbus, Ohio, USA
Seite 144, linke Spalte,
Zusammenfassung 17050r

CHEMICAL ABSTRACTS, Band 81, Nr. 18,
4. November 1974,
Columbus, Ohio, USA
Seite 148, rechte Spalte,
Zusammenfassung 108033z

CHEMICAL ABSTRACTS, Band 82, Nr. 22,
2. Juni 1975,
Columbus, Ohio, USA
Seite 133, linke Spalte,
Zusammenfassung 142233v

CHEMICAL ABSTRACTS, Band 84, Nr. 16,
19. April 1976,
Columbus, Ohio, USA
Seite 135, rechte Spalte,
Zusammenfassung 107882a

(56) Entgegenhaltungen:
CHEMICAL ABSTRACTS, Band 84, Nr. 20,
17. Mai 1976,
Columbus, Ohio, USA
Seite 148, linke Spalte
Zusammenfassung 137974z

CHEMICAL ABSTRACTS, Band 86, Nr. 4,
24. Januar 1977,
Columbus, Ohio, USA
Seite 152, linke Spalte,
Zusammenfassung 19116q

CHEMICAL ABSTRACTS, Band 86, Nr. 20
16. Mai 1977,
Columbus, Ohio, USA
Seite 140, linke Spalte,
Zusammenfassung 142342r

CHEMICAL ABSTRACTS, Band 86, Nr. 24,
13. Juni 1977,
Columbus, Ohio, USA
Seite 285, linke und rechte Spalten,
Zusammenfassung 175863m

CHEMICAL ABSTRACTS, Band 88, Nr. 19,
8. Mai 1978,
Columbus, Ohio, USA
Seite 457, linke Spalte,
Zusammenfassung 135612p

«Verfahren zur Herstellung von Wasserglas»

Gegenstand der Erfindung ist ein Verfahren zur Herstellung filtrierbarer, rückstandsfreier Wasserglaslösungen durch Umsetzen von Flugstäuben, die bei der Gewinnung von Silicium bzw. von Ferrosiliciumlegierungen anfallen, mit Alkalimetallhydroxidlösungen.

Üblicherweise gewinnt man Wasserglaslösungen durch Zusammenschmelzen von möglichst reinem Quarzsand mit Soda oder Pottasche bei 1.400 bis 1.500°C und anschliessendem Lösen der erhaltenen Stückengläser in Wasser unter Druck und bei höheren Temperaturen. Dieses Verfahren ist sowohl apparativ als auch hinsichtlich der erforderlichen Energiemengen sehr aufwendig und bedingt insgesamt relativ hohe Energie- und Anlagekosten.

Es ist ferner bekannt, amorphe Abfallkieselsäuren mit Natronlauge zu Wassergläsern umzusetzen. Nachteilig bei einem solchen Verfahren ist jedoch, dass reine Abfallkieselsäuren nicht in genügend grosser Menge zur Verfügung stehen, so dass man meist gezwungen ist, mehr oder weniger verunreinigte Rohstoffe zu verarbeiten.

Beispielsweise enthalten die bei der Gewinnung von Silicium bzw. von Ferrosiliciumlegierungen in Elektroöfen gebildeten Abgase feinverteilte feste Bestandteile - die sogenannten Flugstäube -, die bei der Reinigung dieser Abgase in beträchtlichen Mengen als Abfallprodukte anfallen. Derartige Flugstäube bestehen zum grössten Teil aus amorphem Siliciumdioxid (ca. 89 bis 98%), das durch Metalloxide und Kohlenstoff verunreinigt ist.

In der DE-A 26 19 604 wird ein Verfahren zur Herstellung von flüssigem Wasserglas durch Umsetzung solcher Flugstäube mit Alkalimetallhydroxid und Wasser bei Temperaturen zwischen 75 und 100°C beschrieben. Das so gewonnene Wasserglas enthält jedoch entsprechend dem eingesetzten Rohstoff Verunreinigungen, die sich nach Aussage dieser Offenlegungsschrift durch Filtrieren der Wasserglaslösungen durch einen Druckfilter entfernen lassen. Die Durchführung einer solchen Filtration wird jedoch nicht weiter erörtert, und auch in den Beispielen der Offenlegungsschrift wird auf eine Abtrennung der Verunreinigungen bewusst verzichtet. Versuche haben jedoch gezeigt, dass die nach den Angaben dieser Offenlegungsschrift gewonnenen Wasserglaslösungen praktisch nicht filtrierbar sind (siehe Vergleichsversuch 1), so dass bei diesem Verfahren tatsächlich nur stark verunreinigte Wassergläser resultieren, die lediglich für einige spezielle technische Zwecke Verwendung finden können.

Aufgabe der vorliegenden Erfindung war es daher, ein Verfahren zur Herstellung von flüssigen Wassergläsern aus derartigen Flugstäuben zu entwickeln, bei dem sich filtrierbare und von unlöslichen Rückständen befreite Wasserglaslösungen gewinnen lassen, die weiterreichende technische Einsatzmöglichkeiten bieten.

Gegenstand der Erfindung ist somit ein Verfahren zur Herstellung von Wasserglaslösungen durch Umsetzen von Flugstäuben, die bei der Gewinnung von Silicium bzw. von Ferrosiliciumlegierungen anfallen, mit wässrigen Alkalimetallhydroxidlösungen, welches dadurch gekennzeichnet ist, dass man Flugstaub mit einer 6 bis 15 Gew.-%igen wässrigen Alkalimetallhydroxidlösung bei Temperaturen oberhalb 120°C im Autoklaven unter erhöhtem Druck behandelt, wobei das Gewichtsverhältnis von Alkalimetallhydroxidlösung zu festem Flugstaub grösser oder gleich 2:1 ist, und die erhaltene Wasserglaslösung anschliessend filtriert.

Überraschenderweise wurde nämlich gefunden, dass die Durchführung der Umsetzung unter den angegebenen Bedingungen zu Reaktionsprodukten führt, die sich leicht filtrieren lassen. Auf diese Weise können aus derartigen Flugstäuben, die bislang zum grössten Tei als Abfallprodukte deponiert werden, in guten Ausbeuten - bezogen auf das im Flugstaub enthaltene Siliciumdioxid - vielseitig verwendbare Wassergläser gewonnen werden, die frei von unlöslichen Rückständen sind.

Für das erfindungsgemässe Verfahren ist es von wesentlicher Bedeutung, dass das Gewichtsverhältnis der wässrigen Alkalimetallhydroxidlösung zu dem eingesetzten festen Flugstaub grösser oder gleich 2:1 ist. Wird dieses Verhältnis unterschritten, so resultieren keine flüssigen Wassergläser, sondern ein festes Reaktionsprodukt, das sich nur noch mechanisch aus dem Autoklaven entfernen lässt (siehe Vergleichsversuch 2). Als besonders vorteilhaft haben sich Gewichtsverhältnisse von Alkalimetallhydroxidlösung zu festem Flugstaub im Bereich von 2:1 bis 5:1 erwiesen. Im Prinzip führen auch Reaktionsansätze mit Gewichtsverhältnissen oberhalb 5:1 zu flüssigen Wassergläsern, jedoch fallen hierbei stärker verdünntere Lösungen an, die zu ihrer weiteren Verwendung meist aufkonzentriert werden müssen.

Zweckmässigerweise hält man bei der Durchführung der Umsetzung Temperaturen im Bereich von 120 bis 190°C ein, da die Bildung flüssiger Wassergläser - je nach dem angestrebten Molverhältnis von $SiO_2$ zu $Me_2O$ (Me = Alkalimetall) - unter den angegebenen Reaktionsbedingungen temperaturabhängig ist. Insbesondere im Hinblick auf die Gewinnung höhergekieselter Wassergläser, mit einem Molverhältnis $SiO_2/ME_2O$ von beispielsweise 4:1, hat es sich als vorteilhaft erwiesen, die Reaktionstemperatur im Bereich von 130 bis 170°C zu halten.

Der Druck im Autoklaven sollte während der Umsetzung im Bereich von 2,9 bis 18,6 bar liegen. Höhere Drücke können generell auch angewendet werden, jedoch führen sie zu keiner Verbesserung der Ergebnisse, erfordern hingegen aufwendigere Massnahmen. Für die untere Grenze des anzuwendenden Drucks ist die gewählte Reaktionstemperatur in Betracht zu ziehen. Im Hinblick auf das einzuhaltende Gewichtsverhältnis von Alkalimetallhydroxidlösung zu festem Flugstaub soll der Druck so hoch sein, dass bei der vorgegebenen Temperatur das Wasser im Autoklaven in der flüssigen Phase verbleibt. Vorteilhafterweise arbeitet man bei Drücken im Bereich von 8,8 bis 14,7 bar.

Als Alkalimetallhydroxide können sowohl Natriumhydroxid als auch Kaliumhydroxid Verwendung finden, wobei die eingesetzten wässrigen Lösungen zweckmässigerweise einen Gehalt an Alkalimetallhydroxid im Bereich von 6 bis 15 Gew.-% aufweisen sollten.

Für das erfindungsgemässe Verfahren kommen generell Flugstäube in Frage, die bei der Silicium- oder Ferrosiliciumherstellung anfallen und die üblicherweise die nachstehende Zusammensetzung aufweisen (Angaben in Gew.-%):

| | | | |
|------|------|---|------|
| $SiO_2$: | 89 | – | 98 |
| SiC: | 0.2 | – | 0.7 |
| C: | 0.2 | – | 2.5 |
| $Fe_2O_3$: | 0.05 | – | 2.5 |
| $Al_2O_3$: | 0.1 | – | 1.5 |
| $TiO_2$: | 0.01 | – | 0.05 |
| CaO: | 0.07 | – | 0.8 |
| MgO: | 0.2 | – | 1.5 |
| $Na_2O$: | 0.1 | – | 1 |
| $K_2O$: | 0.3 | – | 2.2 |
| P: | 0.03 | – | 0.1 |
| S: | 0.03 | – | 0.5 |

Die Form, in der der Flugstaub zu dem erfindungsgemässen Verfahren eingesetzt wird, ist nicht von Bedeutung; er lässt sich staubförmig oder auch als Granulat bzw. in Form von Pellets verwenden.

Die bei der Umsetzung erhaltenen Wasserglaslösungen sind unter Anwendung der herkömmlichen Filtertechniken leicht filtrierbar, beispielsweise durch eine Nutsche mit Perlonfilter oder bei viskoseren Flüssigkeiten mit Hilfe eines Druckfilters. Als Filtrat fallen hierbei rückstandsfreie, meist klare, gelblich gefärbte flüssige Wassergläser an, die – in Abhängigkeit von dem eingesetzten Flugstaub sowie bei der Alkalimetallhydroxidlösung — Feststoffgehalte von 15 bis 35 Gew.-% aufweisen, wobei das Molverhältnis von $SiO_2$ zu $Me_2O$ 2,2:1 bis 4:1 betragen kann.

Die gewonnenen Wassergläser lassen sich für die üblichen bekannten Verwendungszwecke einsetzen, beispielsweise in Wasch- und Reinigungsmitteln, als Bindemittel und Klebstoff, für Beschichtungen und Imprägnierungen, zur Herstellung von Füllstoffen, zur Herstellung anorganischer Silikate bzw. von Kieselgelen etc.

Je nach dem vorgesehenen Verwendungszweck der Wassergläser kann noch eine Entfärbung der leicht gefärbten Lösungen erwünscht sein, die sich jedoch beispielsweise durch Zusatz von Aktivkohle und anschliessender nochmaliger Filtration leicht erzielen lässt. Eine Entfärbung der flüssigen Gläser ist auch durch die Anwendung von Oxidationsmitteln, beispielsweise von 30%iger Wasserstoffperoxidlösung, möglich. Wasserklare Wasserglaslösungen lassen sich ferner gewinnen, wenn der Flugstaub vor der Umsetzung mit der Alkalimetallhydroxidlösung bei Temperaturen im Bereich von 400 bis 600°C mit Luftsauerstoff behandelt wird.

Wie bereits erwähnt, führt das erfindungsgemässe Verfahren je nach den angewandten Reaktionsbedingungen im allgemeinen zu einer hohen Ausbeute an Siliciumdioxid, bezogen auf den eingesetzten Flugstaub. Hohe Ausbeuten lassen sich insbesondere durch eine zusätzliche Aufarbeitung des nach der Filtration verbleibenden Filterkuchens erzielen. Diese Filterkuchen enthalten aufgrund ihrer porösen Struktur sowie ihrer grossen Oberfläche noch beträchtliche Mengen an Wasserglas, die sich mit Wasser oder auch mit der entsprechenden verdünnten Alkalimetallhydroxidlösung auswaschen lassen, wobei verdünnte Wasserglaslösungen anfallen.

Nach einer besonderen Ausführungsform des erfindungsgemässen Verfahrens werden die durch mindestens einmaliges Auswaschen mit Wasser oder mit der entsprechenden verdünnten Alkalimetallhydroxidlösung gewonnenen verdünnten Wasserglaslösungen vorteilhafterweise erneut zusammen mit frischer Alkalimetallhydroxidlösung zur Umsetzung von weiterem Flugstaub verwendet.

Die Durchführung des erfindungsgemässen Verfahrens wird in den nachstehenden Beispielen näher erläutert.

Beispiel 1

In einem gebräuchlichen Rührautoklav aus Chromnickelstahl mit einem Fassungsvermögen von 2 l wurden die Reaktionskomponenten – 301 g granulierter Flugstaub (Wassergehalt 25%, $SiO_2$-Gehalt im Flugstaub ca. 90%), 192 g 50%ige Natronlauge und 539 g Wasser - zusammengegeben, d.h. der Ansatz umfasste 226 g Flugstaub und 806 g wässrige Natronlauge mit einem Gehalt von 118,7 g NaOH/l, das Verhältnis von Lösung zu Feststoff betrug 3,57:1. Zu Beginn des Erhitzens wurde im Autoklav mit einem inerten Fremdgas, beispielsweise Stickstoff, ein Anfangsdruck von 3,9 bar erzeugt. Anschliessend wurde das Reaktionsgemisch auf 170°C erhitzt und bei einem Druck von 14,7 bar 2 Stunden gerührt. Nach dem Abkühlen liess sich das Reaktionsgemisch problemlos mit Hilfe eines Perlonfilters über eine Nutsche filtrieren. Es wurden 429 g Wasserglas mit einem Feststoffgehalt von 26,9% und einem $SiO_2/Na_2O$-Verhältnis von 2,5:1 (19,23 % $SiO_2$; 7,69 % $Na_2O$) gewonnen.

Der verbliebene Filterkuchen wurde anschliessend zweimal mit Wasser ausgewaschen. Es resultierten:
Im 1. Waschwasser 600 g Wasserglas (8,84 % $SiO_2$; 3,59 % $Na_2O$),
im 2. Waschwasser 465 g Wasserglas (5,38 % $SiO_2$; 2,15 % $Na_2O$).

Die Gesamtausbeute an $SiO_2$ als gelöstes Wasserglas beträgt demnach 79 %.

Die Durchführung der nachfolgend beschriebenen Beispiele entspricht – soweit nicht anders vermerkt – den Angaben in Beispiel 1.

Beispiel 2
Ansatz:
226 g Flugstaub (ca. 90%ig)
806 g Natronlauge mit einem Gehalt von 118,7 g NaOH/1 (192 g 50%ige Natronlauge und 614 g Wasser)
Verhältnis Lösung zu Feststoff: 3,57:1

Reaktionsbedingungen:
170°C; 14,7 bar; 1 Stunde.

Es wurden erhalten:
560 g Wasserglas mit einem Feststoffgehalt von 27,5 % und einem $SiO_2/Na_2O$-Verhältnis von 2,64:1 (19,96 % $SiO_2$; 7,55% $Na_2O$).
Im 1. Waschwasser 502 g Wasserglas (9,21 % $SiO_2$; 4,05 % $Na_2O$),
im 2. Waschwasser 435 g Wasserglas (2,9% $SiO_2$; 1,2 % $Na_2O$).
Ausbeute an $SiO_2$: 84 %.

Beispiel 3
Ansatz:
225 g Flugstaub (ca. 90%ig)
808 g Natronlauge mit einem Gehalt von 90,3 g NaOH/1 (149 g 50%ige Natronlauge und 659 g Wasser)
Verhältnis Lösung zu Feststoff: 3,59:1

Reaktionsbedingungen:
150°C; 8,8 bar; 2 Stunden.

Es wurden erhalten:
618 g Wasserglas mit einem Feststoffgehalt von 23,7 % und einem $SiO_2/Na_2O$-Verhältnis von 3,33:1 (18,2 % $SiO_2$; 5,46 % $Na_2O$)
Im 1. Waschwasser 267 g Wasserglas (11,81 % $SiO_2$; 3,7% $Na_2O$),
im 2. Waschwasser 344 g Wasserglas (4,94 % $SiO_2$; 1,65 % $Na_2O$).
Ausbeute an $SiO_2$: 79 %.

Beispiel 4
Ansatz:
300 g Flugstaub (ca. 90%ig)
777 g Natronlauge mit einem Gehalt von 96,8 g NaOH/1 (150 g 50%ige Natronlauge und 627 g Wasser)
Verhältnis Lösung zu Feststoff: 2,59:1

Reaktionsbedingungen:
130°C; 8,8 bar; 1 Stunde.

Es wurden erhalten:
510 g Wasserglas mit einem Feststoffgehalt von 26,3 % und einem $SiO_2/Na_2O$-Verhältnis von 3,85:1 (20,91 % $SiO_2$; 5,43 % $Na_2O$)
Im 1. Waschwasser 445 g Wasserglas (11,62 % $SiO_2$; 3,18 % $Na_2O$),
im 2. Waschwasser 435 g Wasserglas (4,27 % $SiO_2$; 1,36 % $Na_2O$).
Ausbeute an $SiO_2$: 64 %.

Beispiel 5
Ansatz:
196 g Flugstaub (ca. 90%ig)
846 g Natronlauge mit einem Gehalt von 70,1 g NaOH/1 (119 g 50%ige Natronlauge und 727 g Wasser)
Verhältnis Lösung zu Feststoff: 4,32:1

Reaktionsbedingungen:
150°C; 8,8 bar; 2 Stunden.

Es wurden erhalten:
731 g Wasserglas mit einem Feststoffgehalt von 19,1 % und einem $SiO_2/Na_2O$-Verhältnis von 3,18:1 (14,5 % $SiO_2$; 4,56 % $Na_2O$).
Im 1. Waschwasser 374 g Wasserglas (5,63 % $SiO_2$; 1,91 % $Na_2O$),
im 2. Waschwasser 249 g Wasserglas (2,79 % $SiO_2$; 1,05 % $Na_2O$).
Ausbeute an $SiO_2$: 76 %.

Beispiel 6
Ansatz:
180 g Flugstaub (ca. 90%ig)
846 g Natronlauge mit einem Gehalt von 70,1 g NaOH/1 (119 g 50%ige Natronlauge und 727 g Wasser).
Verhältnis Lösung zu Feststoff: 4,7:1

Reaktionsbedingungen:
150°C; 8,8 bar; 30 Minuten.

Es wurden erhalten:
750 g Wasserglas mit einem Feststoffgehalt von 18,3 % und einem $SiO_2/Na_2O$-Verhältnis von 3,02:1 (13,75 % $SiO_2$; 4,55 % $Na_2O$).
Im 1. Waschwasser 339 g Wasserglas (5,54 % $SiO_2$; 2,03 % $Na_2O$),
im 2. Waschwasser 308 g Wasserglas (2,11 % $SiO_2$; 0,81 % $Na_2O$).
Ausbeute an $SiO_2$: 79 %.

Beispiel 7
Ansatz:
346 g Flugstaub (ca. 90%ig)
728 g Natronlauge mit einem Gehalt von 139,4 g NaOH/1 (204 g 50%ige Natronlauge und 524 g Wasser).
Verhältnis Lösung zu Feststoff: 2,1:1.

Reaktionsbedingungen:
150°C; 8,8 bar; 2 Stunden.

Nach dem Erkalten des Reaktionsgemisches resultierte eine zähe viskose Flüssigkeit. Diese wurde mit Hilfe eines Druckfilters bei 90°C und 2,9 bar filtriert.

Es wurden erhalten:
334 g Wasserglas mit einem Feststoffgehalt von 33,6 % und einem $SiO_2/Na_2O$-Verhältnis von 3,38:1 (25,94 % $SiO_2$; 7,67 % $Na_2O$).
Im 1. Waschwasser 772 g Wasserglas (13,84 % $SiO_2$; 4,35 % $Na_2O$,

im 2. Waschwasser 560 g Wasserglas (4,07 % $SiO_2$; 1,44 % $Na_2O$).
Gesamtausbeute an $SiO_2$: 69 %.

Beispiel 8
Herstellung eines Kaliwasserglases.
Ansatz:
280 g Flugstaub (ca. 90%ig)
806 g Kalilauge mit einem Gehalt von 120 g KOH/1 (114 g 85%ige Kalilauge und 692 g Wasser).

Verhältnis Lösung zu Feststoff: 2,88:1.

Reaktionsbedingungen:
170°C; 14,7 bar; 2 Stunden.

Es wurden erhalten:
804 g Wasserglas mit einem Feststoffgehalt von 27,1 % und einem $SiO_2/K_2O$-Verhältnis von 2,41:1 (19,14 % $SiO_2$; 7,94 % $K_2O$).
Im 1. Waschwasser 549 g Wasserglas (4,06 % $SiO_2$; 2,04 % $K_2O$),
im 2. Waschwasser 367 g Wasserglas (1,45 % $SiO_2$; 0,93 % $K_2O$).
Ausbeute an $SiO_2$: 72%.

Vergleichsbeispiel 1
Entsprechend den Angaben der DE-A. 26 19 604 (Beispiel 2) wurde Flugstaub mit wässriger Natronlauge ohne Anwendung von Druck umgesetzt.

Ansatz:
367 g Flugstaub (ca. 90%ig)
848 g Natronlauge mit einem Gehalt von 81 g NaOH/1 (138 g 50%ige Natronlauge und 710 g Wasser)

Reaktionsbedingungen:
Das Reaktionsgemisch wurde in einem offenen Gefäss unter Rühren im Verlaufe von 30 Minuten auf 85°C erwärmt und anschliessend zur Abkühlung in ein anderes kaltes Gefäss umgegossen.

Es wurden erhalten:
1210 g Wasserglas, das jedoch weder über eine Filternutsche mit verschiedenen Filtertypen (Perlon, Papier etc.) noch über einen Druckfilter (2,9 bar) filtrierbar war.

Vergleichsbeispiel 2
Ansatz:
500 g Flugstaub (ca. 90%ig)
600 g Natronlauge mit einem Gehalt von 148,4 g NaOH/1 (178 g 50%ige Natronlauge und 422 g Wasser)
Verhältnis Lösung zu Feststoff: 1,2:1

Reaktionsbedingungen:
150°C; 8,8 bar.

Nach Erreichen der angestrebten Reaktionstemperatur von 150°C wurde der Ansatz fest und konnte nicht mehr gerührt werden. Flüssiges Wasserglas war auf diese Weise nicht zu erhalten.

**Patentansprüche**

1. Verfahren zur Herstellung von Wasserglaslösungen durch Umsetzen von Flugstäuben, die bei der Gewinnung von Silicium bzw. von Ferrosiliciumlegierungen anfallen, mit wässrigen Alkalimetallhydroxidlösungen, dadurch gekennzeichnet, dass man Flugstaub mit einer 6 bis 15 Gew.-%igen wässrigen Alkalimetallhydroxidlösung bei Temperaturen oberhalb 120°C im Autoklaven unter erhöhtem Druck behandelt, wobei das Gewichtsverhältnis von Alkalimetallhydroxidlösung zu festem Flugstaub grösser oder gleich 2:1 ist, und die erhaltene Wasserglaslösung anschliessend filtriert.

2. Verfahren nach Anspruch 1, dadurch gekennzeichnet, dass man die Umsetzung bei einer Temperatur im Bereich von 120 bis 190°C, vorzugsweise von 130 bis 170°C, vornimmt.

3. Verfahren nach Anspruch 1 und 2, dadurch gekennzeichnet, dass man die Umsetzung bei einem Druck im Bereich von 2,9 bis 18,6 bar, vorzugsweise von 8,8 bis 14,7 bar, vornimmt.

4. Verfahren nach Anspruch 1 bis 3, dadurch gekennzeichnet, dass das Verhältnis von Alkalimetallhydroxidlösung zu festem Flugstaub 2:1 bis 5:1 beträgt.

5. Verfahren nach Anspruch 1 bis 4, dadurch gekennzeichnet, dass man den nach erfolgter Filtration verbleibenden Filterkuchen mindestens einmal mit Wasser oder der entsprechenden verdünnten Alkalimetallhydroxidlösung auswäscht und die so gewonnene verdünnte Wasserglaslösung zusammen mit Alkalimetallhydroxidlösung zur Umsetzung von weiterem Flugstaub verwendet.

**Claims**

1. A process for the production of waterglass solutions by reacting fine dusts of the type which accumulate in the production of silicon and ferrosilicon alloys with aqueous alkali metal hydroxide solutions, characterised in that fine dust is treated with a 6 to 15% by weight aqueous alkali metal hydroxide solution in an autoclave under elevated pressure and at temperatures above 120°C, the ratio by weight of alkali metal hydroxide solution to solid fine dust being 2:1 or greater, and the waterglass solution obtained is subsequently filtered.

2. A process as claimed in Claim 1, characterised in that the reaction is carried out at a temperature in the range from 120 to 190°C and preferably at a temperature in the range from 130 to 170°C.

3. A process as claimed in Claims 1 and 2, characterised in that the reaction is carried out under a pressure in the range from 2.9 to 18.6 bars and preferably under a pressure of from 8.8 to 14.7 bars.

4. A process as claimed in Claims 1 to 3, characterised in that the ratio of alkali metal hydroxide solution to solid fine dust amounts to between 2:1 and 5:1.

5. A process as claimed in Claims 1 to 4, characterised in that the filter cake left after filtration is washed out at least once with water or the corresponding dilute alkali metal hydroxide solution and the dilute waterglass solution thus obtained is used together with alkali metal hydroxide solution for reaction with more fine dust.

## Revendications

1. Procédé de préparation de solutions de silicates de métaux alcalins vitreux par réaction de poussières volantes obtenues à la préparation du silicium ou d'alliages de ferrosilicium avec des solutions aqueuses d'hydroxydes de métaux alcalins, caractérisé en ce que l'on traite les poussières volantes par une solution aqueuse d'hydroxyde de métal alcalin à une concentration de 6 à 15% en poids à des températures supérieures à 120°C à l'autoclave, sous pression, avec des proportions relatives en poids supérieures ou égales à 2:1 entre la solution d'hydroxyde de métal alcalin et les poussières volantes solides, après quoi on filtre la solution de silicate de métal alcalin vitreux obtenue.

2. Procédé selon la revendication 1, caractérisé en ce que l'on effectue la réaction à une température dans l'intervalle de 120 à 190°C, de préférence de 130 à 170°C.

3. Procédé selon les revendications 1 et 2, caractérisé en ce que l'on effectue la réaction à une pression dans l'intervalle de 2,9 à 18,6 bars, de préférence de 8,8 à 14,7 bars.

4. Procédé selon l'une quelconque des revendications 1 à 3, caractérisé en ce que les proportions relatives entre la solution d'hydroxyde de métal alcalin et les poussières volantes solides sont de 2:1 à 5:1.

5. Procédé selon les revendications 1 à 4, caractérisé en ce que, après filtration, on lave le gâteau de filtration au moins une fois à l'eau ou avec la solution d'hydroxyde de métal alcalin diluée et on réutilise la solution diluée de silicate de métal alcalin ainsi obtenue avec une solution d'hydroxyde de métal alcalin pour une réaction avec une nouvelle charge de poussières volantes.